# EUROPEAN PATENT SPECIFICATION

(11) **EP 2 215 159 B1**
(45) Date of publication and mention of the grant of the patent: **24.10.2012**
(21) Application number: 07860800.7
(22) Date of filing: 31.12.2007
(51) Int. Cl.: C08L 51/04, C08L 71/12, C08K 5/5357, C08K 5/51, C08K 5/523

(54) **NON-HALOGEN FLAMEPROOF RESIN COMPOSITION**
HALOGENFREIE FLAMMFESTE HARZZUSAMMENSETZUNG
COMPOSITION DE RÉSINE IGNIFUGE SANS HALOGÈNE

(30) Priority: 19.11.2007 KR 20070117959
(43) Date of publication of application: 11.08.2010
(73) Proprietor: CHEIL INDUSTRIES INC., Gumi-si Gyeongsangbuk-do 730-710 (KR)
(72) Inventor: LEE, Min Soo, Ansan-si Gyeonggi-do 426-730 (KR); JOO, Beom Jun, Seoul 138-743 (KR); LEE, Byun Kun, Gunpo-si Gyeonggi-do 435-010 (KR); HONG, Sang Hyun, Uiwang-si Gyeonggi-do 437-756 (KR)
(74) Representative: Bublak, Wolfgang
(86) International application number: PCT/KR2007/007023
(87) International publication number: WO 2009/066831

(56) References cited:
- JP-A- 11 199 721
- KR-A- 20060 003 854
- KR-A- 20070 017 887
- US-A- 4 520 152
- US-A1- 2002 137 824
- US-A1- 2002 161 081
- US-A1- 2006 189 729

## Description

### Technical Field

The present invention relates to a non-halogen flameproof resin composition. More particularly, the present invention relates to a non-halogen flameproof resin composition with good flame retardancy and impact strength, in which a cyclic t-butyl phosphonate is used as a flame retardant in a base resin including an aromatic vinyl resin and a polyphenylene ether resin.

### Background Art

Generally, styrenic resin has good processability and mechanical properties, and thus has been used as an outer part material in many electronic goods. However, styrenic resin itself has a tendency to readily combust and has no resistance against fire. Thus, styrenic resin can readily catch and spread fire from an external igniting source. Accordingly, styrenic resins are subject to various mandatory controls on flammability for safety reasons in the United States, Japan, Europe, etc, and are required to have high flame retardancy to meet the Underwriter's Laboratories Standard for use in the housing of electric appliances.

One well known and widely used method for imparting flame retardancy is to add halogen-containing flame retardants and antimony compounds to rubber-reinforced styrenic resin. Such halogen-containing compounds include polybromodiphenyl ether, tetrabromobisphenol A, bromine-substituted epoxy compounds, chlorinated polyethylene and the like. Antimony trioxide and antimony pentoxide are mainly used as the antimony compounds.

Imparting flame retardancy by using halogen and antimony compounds together has the advantages of ease in obtaining flame retardancy and little deterioration of physical properties. However, hydrogen halide produced during processing can have a harmful effect on health. In particular, the main halogen-containing flame retardant, polybromodiphenyl ether, is highly likely to produce very toxic gas such as dioxin or furan. Hence, a method for imparting flame retardancy without using halogen-containing compound has become a matter of concern.

Because rubber-modified styrenic resin generally has little remaining char during combustion, it is hard to impart flame retardancy to it in its solid state (Journal of Applied Polymer Science, 1998, vol. 68, p.1067). Therefore, it is necessary to add a char forming agent so that char can be well formed in order to obtain desirable flame retardancy.

U.S. Patent No.4,520,152 discloses flame retardant compositions including polyphenylene ether resin, a styrene resin and a cyclic phosphonate. However, it has a disadvantage in that it is necessary to use 20 wt% or more of polyphenylene ether.

Japanese Patent Laid-Open No. 11-199721 discloses a flame-retardant propylene resin composition including a propylene resin, a nitrogenous thermoplastic resin, phosphorus nitrogen flame retardant, and modified polypropylene. However, it fails to disclose a flame retardant method for styrenic resin or styrenic resin-based blend.
Patent document US 2007/032579 A1 discloses a polymer composition comprising a rubber modified vinyl resin, comprising a polyphenylene ether resin and a cyclic phosphonate compound. Said cyclic phosphonate compound may include mixtures of bis-(1,3,2-dioxaphofinan-5-yl)-ester P,P'-dioxide phosphonates and (1,3,2-dioxaphorinan-5-yl) alkyl ester P-oxide phosphonates.
Patent document KR 2006 0003854 A discloses a flameproof styrenic resin composition comprising a rubber-modified polystyrene resin and a ring-shaped alkyl
phosphonic acid compound. Examples of said phosphonic acid compound include bis-(1,3,2-dioxaphorinan-5-yl)-ester P,P'-dioxide phosphonates and (1,3,2-dioxaphorinan-5-yl) alkyl ester P-oxide phosphonates. Additionally, a polyphenylene ether resin may be present.
Patent document US 2006/189729 A1 discloses a rubber modified vinyl resin, a cyclic alkyl phosphate compound and an aromatic phosphate ester. Additionally, a polyphenylene ether resin may be present. Examples of said cyclic alkyl phosphate compound include bis-(1,3,2-dioxaphorinan-5-yl)-phosphonic acid ester P,P'-dioxides and (1,3,2-dioxaphorinan-5-yl) alkyl phosphonic acid ester P-oxides.

Accordingly, the present inventors have developed a non-halogen flameproof resin composition having improved flame retardancy and impact strength and as well as stability against fire by adding cyclic t-butyl phosphonate as a flame retardant to a base resin comprising aromatic vinyl resin and polyphenylene ether.

### Disclosure of Invention

### Technical Problem

An object of the present invention is to provide a non-halogen flameproof resin composition having stability against fire.

Another object of the present invention is to provide an environmentally friendly non-halogen flameproof resin composition which does not use halogen-containing flame retardant that causes generation of toxic pollutants during the preparation or combustion of the resin.

Another object of the present invention is to provide a flame retardant resin composition with good moldability by decreasing the amount of polyphenylene ether in the resin composition.

Another object of the present invention is to provide a flame retardant resin composition with good impact strength.

Other objects and advantages of this invention will be apparent from the following disclosure and appended claims.

### Technical Solution

The non-halogen flameproof resin composition of the present invention includes (A) 80 to 99 parts by weight of an aromatic vinyl resin; (B) 1 to 20 parts by weight of a polyphenylene ether resin and (C) 0.5 to 30 parts by weight of a cyclic t-butyl phosphonate compound, per 100 parts by weight of a base resin comprising (A) and (B), wherein the cyclic t-butyl phosphonate compound (C) can be represented by the following chemical formula 1. [22] [23] [24] [25] wherein R and R is hydrogen, a C -C alkyl or an aryl group. .

In an embodiment of the present invention, the aromatic vinyl resin may be a polymer from a rubber and an aromatic monoalkenyl monomer.

In another embodiment of the present invention, the aromatic vinyl resin may be a polymer from a rubber, an aromatic monoalkenyl monomer and a monomer copolymerizable with the aromatic monoalkenyl monomer. The copolymerizable monomers may be alkyl ester monomers, unsaturated nitrile monomers or mixtures thereof.

In embodiments of the present invention, the polyphenylene ether resin (B) may be poly (2,6-dimethyl-1,4-phenylene) ether.

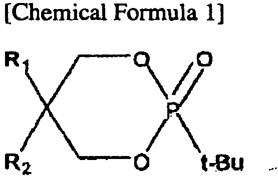

In the present invention, the flame retardant resin composition may further include (D) an aromatic phosphoric ester compound.

Additionally, the flame retardant resin composition of the present invention may further include other additives such as plasticizers, lubricants, heat stabilizers, anti-dripping agents, antioxidants, compatibilizers, light-stabilizers, pigments, dyes, or inorganic fillers . Those additives may be used alone or in combination with one another.

A more detailed description of each of the components of the resin composition according to various embodiments follows.

### Best Mode for Carrying Out the Invention

(A) Aromatic vinyl resin

The aromatic vinyl resin (A) used in the resin composition of the present invention is a polymer from a rubber, an aromatic monoalkenyl monomer and optionally a monomer copolymerizable with the aromatic monoalkenyl monomer.

In an embodiment of the present invention, the aromatic vinyl resin may be a polymer from a rubber and an aromatic monoalkenyl monomer.

In another embodiment of the present invention, the aromatic vinyl resin may be a polymer from a rubber, an aromatic monoalkenyl monomer and a monomer polymerizable with the aromatic monoalkenyl monomer. The polymerizable monomers may be alkyl ester monomers, unsaturated nitrile monomers or mixtures thereof.

The rubber may be diene-rubbers such as polybutadiene, poly (styrene-butadiene) or poly (acrylonitrile-butadiene) ; saturated rubbers in which hydrogen is added to the diene rubbers; isoprene rubbers; alkyl acrylate rubbers; ethylene-propylene-diene terpolymers (EPDM), or ethylene-propylene rubbers . Preferably, polybutadiene, poly (styrene-butadiene) isoprene, alkyl acrylate rubbers may be used. The rubbers may be used alone or in combination with one another.

In the present invention, the rubber may be used in an amount of 3 to 30 wt% based on 100 wt% of the aromatic vinyl resin (A) preferably 5 to 15 wt%. In an embodiment, the rubber preferably has a particle size of 0.1 to 4.0 µm in order to render optimum properties in the blend of the aromatic vinyl resin (A) and the polyphenylene ether (B).

The aromatic monoalkenyl monomer may be preferably a styrenic monomer. For example, styrene, α-methyl styrene, o-, m- or p-methyl styrene, ethyl styrene, isobutyl styrene, or tert-butyl styrene, without limitation, can be used. Styrene is most preferable. The aromatic monoalkenyl monomer can be co-polymerized with rubber, in an amount of 70 to 97 wt% based on 100 wt% of the aromatic vinyl resin (A) preferably 85 to 95 wt%.

In exemplary embodiments, other monomers copolymerizable with the aromatic monoalkenyl monomers may also be employed. The monomers which may be copolymerized with the aromatic monoalkenyl monomers may include alkyl ester monomers, unsaturated nitrile monomers or mixtures thereof. In an embodiment, monomers such as acrylonitrile, acrylic acid, methacrylic acid, maleic anhydride, or N-substituted maleimide can be added into the aromatic vinyl resin in order to impart physical properties such as chemical resistance, processability and thermal resistance. The copolymerizable monomer with the aromatic monoalkenyl monomer may be used in an amount of 40 wt% or less based on 100 wt% of the aromatic vinyl resin (A).

The aromatic vinyl resin (A) can be prepared by methods such as bulk polymerization, suspension polymerization, emulsion polymerization or combinations thereof. Among them, bulk polymerization may be preferably used.

The aromatic vinyl resin (A) can be polymerized by thermal polymerization with or without using initiators. The initiators may be selected from the group consisting of peroxide initiators such as benzoyl peroxide, t-butyl hydroperoxide, acetyl peroxide, or cumene hydroperoxide ; azo initiators such as azobisisobutyronitrile; and mixtures thereof.

In the present invention, the aromatic vinyl resin (A) is used in an amount of 80 to 99 parts by weight, based on 100 parts by weight of the base resin.

(B) Polyphenylene ether

Since the resin including only the rubber-reinforced styrenic resin (A) does not have sufficient flame retardancy and thermal resistance, the present invention includes polyphenylene ether (B) in the base resin.

Examples of suitable polyphenylene ether resins can include without limitation poly(2,6-dimethyl-1,4-phenylene) ether, poly(2,6-diethyl-1,4-phenylene) ether, poly(2,6-dipropyl-1,4-phenylene) ether, poly(2-methyl-6-ethyl-1,4-phenylene) ether, poly(2-methyl-6-propyl-1,4-phenylene) ether, poly(2-ethyl-6-propyl-1,4-phenylene) ether, poly(2,6-diphenyl-1,4-phenylene) ether, copolymer of poly(2,6-dimethyl-1,4-phenylene) ether and poly(2,3,6-trimethyl-1,4-phenylene) ether, and copolymer of poly(2,6-dimethyl-1,4-pheylene) ether and poly(2,3,5-triethyl-1,4-phenylene) ether, and mixtures thereof. Among the se, poly (2,6-dimethyl-1,4-phenylene) ether is most preferable.

The degree of polymerization of the polyphenylene ether (B) is not limited specifically, but can vary depending on factors such as heat-stability or processability of the resin composition. The intrinsic viscosity of the polyphenylene ether can be in the range of 0.2 to 0.8 measured in chloroform solvent at 25 °C.

The polyphenylene ether (B) of the present invention can be used in an amount of 1 to 20 parts by weight, for example 10 to 20 parts by weight. Using less than 1 part by weight can deteriorate flame retardancy, while using more than 20 parts by weight may degrade moldability.

(C) Cyclic t-butyl phosphonate

The cyclic t-butyl phosphonate compounds of the present invention are cyclic t-butyl phosphonate compounds represented by the chemical formula 1 or mixtures thereof.

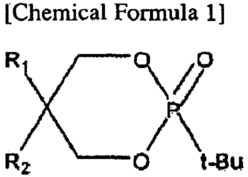

wherein R₁ and R₂ are hydrogen, a C₁-C₆ alkyl or a C₆-C₁₀ aryl group.

The cyclic t-butyl phosphonate is used in an amount of 0.5 to 30 parts by weight, based on 100 parts by weight of the base resin, preferably 5 to 25 parts by weight, and more preferably 10 to 25 parts by weight. When the cyclic t-butyl phosphonate is used in an amount less than 0.5 parts by weight, desired flame retardancy cannot be achieved, and when used in an amount more than 30 parts by weight, the mechanical properties may decrease.

(D) Aromatic phosphoric ester compound

The flame retardant resin composition of the present invention may optionally include aromatic phosphoric ester compounds. The aromatic phosphoric ester compounds can be represented by the following chemical formula 2.

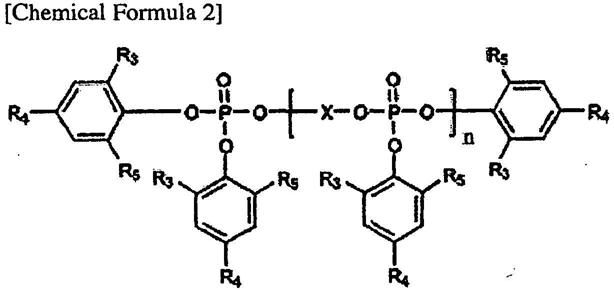

wherein R , R₄, and R are each independently hydrogen or a C -C alkyl group, X is a C₆-C₂₀ aryl group or an alkyl-substituted C₆-C₂₀ aryl group, and n is about 0∼4.

In the above formula, X is a derivative from a dialcohol such as resorcinol, hydroquinol, or bisphenol-A . Where n is Q the compounds represented in the chemical formula 2 include triphenyl phosphate, or tri(2,6-dimethyl) phosphate, and where n is 1, the compounds include resorcinol bis(diphenyl) phosphate, resorcinol bis(2,6-dimethyl phenyl) phosphate, resorcinol bis(2,4-ditertiary butyl phenyl) phosphate, hydroquinol bis (2,6-dimethyl phenyl) phosphate, or hydroquinol bis(2,4-ditertiary butyl phenyl) phosphate. The aromatic phosphoric ester compound (D) can be used alone or in combination therewith.

The aromatic phosphoric ester compound (D) is used in an amount of 30 parts by weight or less. If the aromatic phosphoric ester compound is used in an amount more than 30 parts by weight, the mechanical properties may decrease.

The resin composition according to the present invention may further include other additives depending on its use. Examples of such additives may include without limitation plasticizers, lubricants, heat stabilizers, anti-dripping agents, antioxidants, compatibilizers, light-stabilizers, pigments, dyes, or inorganic fillers . The additives can be used alone or in combination with one another. Examples of the inorganic fillers may include asbestos, glass fibers, talc, ceramic and sulfates. The additives can be added in an amount of 30 parts by weight or less per the total weight of the resin composition.

The flame retardant resin composition according to the present invention can be prepared by a conventional process. For example, all the components and additives can be mixed together and extruded through an extruder and can be prepared in the form of pellets. The pellets can be molded by a conventional method to form housings of electric/electronic goods such as televisions, washing machines, telephones, audio systems, video players, or CD players, and inner/outer parts of office automation equipment.

The invention may be better understood by reference to the following examples which are intended for the purpose of illustration and are not to be construed as in any way as limiting the scope of the present invention, which is defined in the claims appended hereto.

### Mode for the Invention

**Examples**

Each component used in the following examples and comparative examples are as follows.

(A) Aromatic vinyl resin

Rubber-reinforced styrenic resin HG-1760S manufactured by Cheil Industries Inc. of South Korea was used.

(B) Polyphenylene ether (PPE) resin

Poly (2,6-dimethyl-phenylether) manufactured by Mitsubishi Engineering-Plastics Corp. of Japan (product name: PX-100F) having several tens µm of an average diameter in the form of powder was used.

(c1) Cyclic t-butyl phosphonate

Aluminum chloride (130 g, 1.0 mol) and dichloromethane (200 mL) were added into a vessel and stirred with dropwise addition of phosphorus trichloride (140 g, 1.0 mol) at room temperature for 1 hour. The temperature of the vessel was lowered to 0 °C and t-butyl chloride (93 g, 1.0 mol) was dropwise added with stirring under a nitrogen atmosphere. After the completion of the dropping, the mixture was further stirred for 12 hours at room temperature to form a slurry. The resulting mixture was added with chloroform (200 mL) stirred and followed by addition of diluted HCl (400 mL) and stirring. Then the organic layer was taken and evaporated under reduced pressure to obtain t-butyl phosphonic dichloride. Then, an equivalent of the t-butyl phosphonic dichloride and 2,2-methyl-propanediol respectively, two equivalent of triethylamine, and 200 ml of toluene were charged into a vessel and refluxed at 130 °C for 10 hours. After the completion of the reaction, ethyl acetate (100 ml) and water (200 ml) were added to the vessel and stirred until solid has disappeared. Then the organic layer was taken and evaporated under reduced pressure to obtain cyclic t-butyl phosphonate with 99 % or more purity and 50 % yield.

(c2) Cyclic phenyl phosphonate

Cyclic phenyl phosphonate with 99 % or more purity and 50 % yield was obtained by the same procedure as (c1) except using phenyl chloride instead of t-butyl chloride.

(c3) Cyclic methyl phosphonate

Cyclic methyl phosphonate with 99 % or more purity and 50 % yield was obtained by the same procedure as (c1) except using methyl chloride instead of t-butyl chloride.

(c4) Cyclic n-butyl phosphonate

Cyclic n-butyl phosphonatet-butylchloride with 99 % or more purity and 50 % yield was obtained by the same procedure as (c1) except using n-butyl chloride instead of t-butyl chloride.

(D) Aromatic phosphoric ester compound

Tetra-2,6-dimethyl phenyl resorcinol diphosphate made by Daihachi Chemical Industry Co., Ltd. of Japan (product name: PX-200) was used.

**Examples 1∼4**

The components as shown in Table 1 were mixed and the mixture is extruded at 200 to 280 °C with a conventional twin-screw extruder in pellets. The pellets were dried at 80 °C for 2 hours and then molded into test specimens for flame retardancy using an injection molding machine at 180 to 280 °C and mold temperature of 40 to 80 °C. The flame retardancy was measured in accordance with UL 94 VB for a thickness of 1/8". Impact strength was measured in accordance with ASTM D 256 for a thickness of 1/8". The melt index was measured according to ASTM D1238 (200 °C, 5 kg).

**Comparative Examples 1∼6**

Comparative Examples 1∼6 were prepared in the same manner as in Examples 1∼4 except that each of compositions is used in accordance with below Table 1. The results are shown in Table 1.

Table 1

### [Table 1]

**[Table ]**

| | | Examples | | | | Comparative examples | | | | | |
|---|---|---|---|---|---|---|---|---|---|---|---|
| | | 1 | 2 | 3 | 4 | 1 | 2 | 3 | 4 | 5 | 6 |
| (A) HIPS | | 85 | 85 | 85 | 90 | 85 | 85 | 85 | 85 | 85 | 70 |
| (B) PPE | | 15 | 15 | 15 | 10 | 15 | 15 | 15 | 15 | 15 | 30 |
| (C) | (c1) | 20 | 10 | 5 | 20 | - | - | - | - | - | 20 |
| | (c2) | - | - | - | - | - | - | 20 | - | - | - |
| | (c3) | - | - | - | - | - | - | - | 20 | - | - |
| | (c4) | - | - | - | - | - | - | - | - | 20 | - |
| Aromatic phosphoric ester | | - | - | 15 | - | 20 | 15 | - | - | - | - |
| UL94 flame retardancy (1/8") | | V-0 | V-1 | V-1 | V-1 | Fail | Fail | V-1 | V-1 | Fail | V-0 |
| IZOD(kgf·cm/cm) | | 8.8 | 8.1 | 7.0 | 7.5 | 7.0 | 7.3 | 8.6 | 7.9 | 8.2 | 7.8 |
| Melt Index(200 °C) | | 7.9 | 8.1 | 7.8 | 8.4 | 8.1 | 7.6 | 7.8 | 7.9 | 8.0 | 5.1 |

As shown above, the resin compositions employing cyclic t-butyl phosphonate show higher flame retardancy and impact strength at a thickness of 1/8" than those using aromatic phosphoric ester compound only.

Also, Example 1 and Comparative Examples 3∼5 show that the flame retardancy and the impact strength for a thickness of 1/8" are better when using cyclic t-butyl phosphonate compound than when using cyclic phosphonate compounds having a phenyl, methyl, or n-butyl group instead of t-butyl group.

In addition, the fluidity is excellent in Examples 1 and 4 in which less than 20 parts by weight of polyphenylene ether is used, while the fluidity is significantly poor in Comparative Example 6 in which polyphenylene ether is used in an amount more than 20 parts by weight.

In the above, the present invention was described based on the specific preferred embodiments, but it should be apparent to those of ordinary skill in the art that various changes and modifications can be added without departing from the scope of the present invention which will be defined in the appended claims.

## Claims

1. A non-halogen flameproof resin composition comprising
(A) 80 to 99 parts by weight of an aromatic vinyl resin;
(B) 1 to 20 parts by weight of a polyphenylene ether; and
(C) 0.5 to 30 parts by weight of a cyclic t-butyl phosphonate compound, per 100 parts by weight of a base resin comprising (A) and (B), wherein said cyclic t-butyl phosphonate compound (C) is represented by the following chemical formula 1: 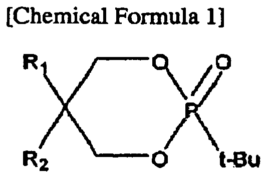 where R₁ and R₂ are independently hydrogen, a C₁-C₆ alkyl group or a C₆-C₁₀ aryl group

2. The non-halogen flameproof resin composition of Claim 1, wherein said aromatic vinyl resin is a polymer from a rubber and an aromatic monoalkenyl monomer.

3. The non-halogen flameproof resin composition of Claim 1, wherein:
said aromatic vinyl resin is a polymer from a rubber, aromatic monoalkenyl monomers and monomers polymerizable with said aromatic monoalkenyl monomers; and
said polymerizable monomers are selected from the group consisting of alkyl ester monomers, unsaturated nitrile monomers and mixtures thereof.

4. The non-halogen flameproof resin composition of Claim 1, wherein said polyphenylene ether (B) is poly (2,6-diinethyl-1,4-phenylene) ether.

5. The non-halogen flameproof resin composition of Claim 1, further comprising 30 parts by weight or less of (D) aromatic phosphoric ester compound based on 100 parts by weight of the base resin.

6. The non-halogen flameproof resin composition of Claim 5, wherein said aromatic phosphoric ester compound (D) is represented by the following chemical formula 2: 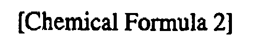 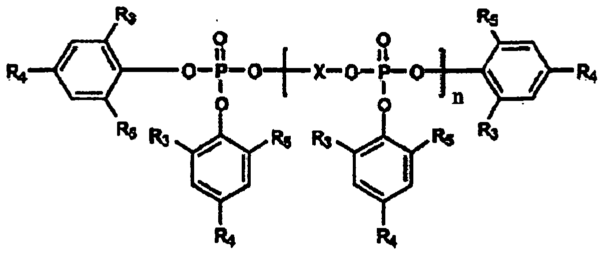 where R , R , and R are each independently hydrogen or a C -C alkyl group, X is a C₆-C₂₀ aryl group or an alkyl-substituted C₆-C₂₀ aryl group, and n is 0.4.

7. The non-halogen flameproof resin composition of Claim 1, further comprising additives selected from the group consisting of plasticizers, lubricants, heat stabilizers, anti-dripping agents, antioxidants, compatibilizers, light-stabilizers, pigments, dyes, inorganic fillers and mixtures thereof, in an amount of 30 parts by weight or less based on 100 parts by weight of the base resin.

8. A molded article molded from the non-halogen flameproof resin composition in any one of Claims 1 to 7.

## Patentansprüche

1. Halogenfreie, flammfeste Harzzusammensetzung, umfassend
(A) 80 bis 99 Gewichtsteile eines aromatischen Vinylharzes;
(B) 1 bis 20 Gewichtsteile eines Polyphenylenethers; und
(C) 0,5 bis 30 Gewichtsteile einer cyclischen t-Butylphosphonatverbindung pro 100 Gewichtsteile eines (A) und (B) umfassenden Basisharzes, wobei die cyclische t-Butylphosphonatverbindung (C) durch die folgende chemische Formel 1 dargestellt ist: 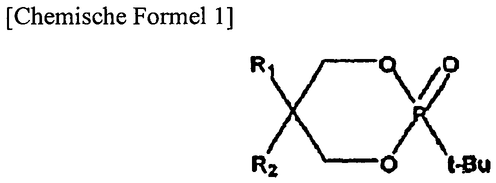 wobei R₁ und R₂ unabhängig Wasserstoff, eine C₁-C₆-Alkylgruppe oder eine C₆-C₁₀-Arylgruppe sind.

2. Halogenfreie, flammfeste Harzzusammensetzung nach Anspruch 1, wobei das aromatische Vinylharz ein Polymer aus einem Kautschuk und einem aromatischen Monoalkenylmonomer ist.

3. Halogenfreie, flammfeste Harzzusammensetzung nach Anspruch 1, wobei:
das aromatische Vinylharz ein Polymer aus einem Kautschuk, aromatischen Monoalkenylmonomeren und mit den aromatischen Monoalkenylmonomeren polymerisierbaren Monomeren ist; und
die polymerisierbaren Monomere ausgewählt sind aus der Gruppe, bestehend aus Alkylestermonomeren, ungesättigten Nitrilmonomeren und Gemischen davon.

4. Halogenfreie, flammfeste Harzzusammensetzung nach Anspruch 1, wobei der Polyphenylenether (B) Poly(2,6-dimethyl-1,4-phenylen)ether ist.

5. Halogenfreie, flammfeste Harzzusammensetzung nach Anspruch 1, des Weiteren umfassend 30 Gewichtsteile oder weniger einer (D) aromatischen Phosphorsäureesterverbindung auf der Basis von 100 Gewichtsteilen des Basisharzes.

6. Halogenfreie, flammfeste Harzzusammensetzung nach Anspruch 5, wobei die aromatische Phosphorsäureesterverbindung (D) durch die folgende chemische Formel 2 dargestellt ist: 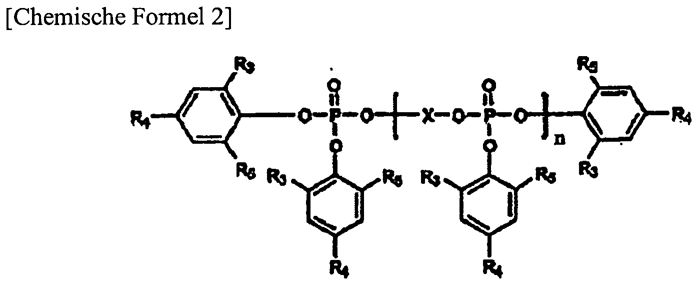 wobei R₃, R₄ und R₅ jeweils unabhängig Wasserstoff oder eine C₁-C₄-Alkylgruppe sind, X eine C₆-C₂₀-Arylgruppe oder eine alkylsubstituierte C₆-C₂₀-Arylgruppe ist und n 0∼4 beträgt.

7. Halogenfreie, flammfeste Harzzusammensetzung nach Anspruch 1, des Weiteren umfassend Zusätze, ausgewählt aus der Gruppe, bestehend aus Weichmachern, Schmiermitteln, Wärmestabilisatoren, Tropfhemmern, Antioxidationsmitteln, Verträglichmachern, Lichtstabilisatoren, Pigmenten, Farbstoffen, anorganischen Füllstoffen und Gemischen davon, in einer Menge von 30 Gewichtsteilen oder weniger auf der Basis von 100 Gewichtsteilen des Basisharzes.

8. Formgegenstand, der aus der halogenfreien, flammfesten Harzzusammensetzung in einem der Ansprüche 1 bis 7 geformt ist.

## Revendications

1. Composition de résine ignifuge non halogénée comprenant
(A) 80 à 99 parties en poids d'une résine vinylique aromatique ;
(B) 1 à 20 parties en poids d'un éther de polyphénylène ; et
(C) 0,5 à 30 parties en poids d'un composé de t-butyl-phosphonate cyclique, pour 100 parties en poids d'une résine de base comprenant (A) et (B),
dans laquelle ledit composé de t-butyl-phosphonate cyclique (C) est représenté par la formule chimique 1 suivante : 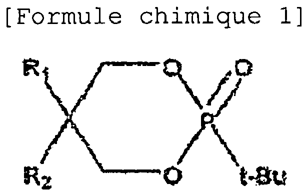 dans laquelle R₁ et R₂ sont indépendamment un hydrogène, un groupe alkyle en C₁-C₆ ou un groupe aryle en C₆- C₁₀.

2. Composition de résine ignifuge sans halogène selon la revendication 1, dans laquelle ladite résine vinylique aromatique est un polymère choisi parmi un caoutchouc et un monomère monoalcényle aromatique.

3. Composition de résine ignifuge sans halogène selon la revendication 1, dans laquelle :
ladite résine vinylique aromatique est un polymère issu d'un caoutchouc, de monomères monoalcényles aromatiques et de monomères polymérisables avec lesdits monomères monoalcényles aromatiques ; et
lesdits monomères polymérisables sont choisis dans le groupe constitué par des monomères d'alkylester, des monomères nitriles insaturés et leurs mélanges.

4. Composition de résine ignifuge sans halogène, selon la revendication 1, dans laquelle ledit éther de polyphénylène (B) est le poly(2,6-diméthyl-1,4-phénylène)éther.

5. Composition de résine ignifuge sans halogène, selon la revendication 1, comprenant en outre 30 parties en poids ou moins de (D) un composé ester phosphorique aromatique à base de 100 parties en poids de la résine de base.

6. Composition de résine ignifuge sans halogène, selon la revendication 5, dans laquelle ledit composé ester phosphorique aromatique (D) est représenté par la formule chimique 2 suivante : 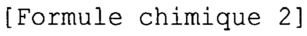 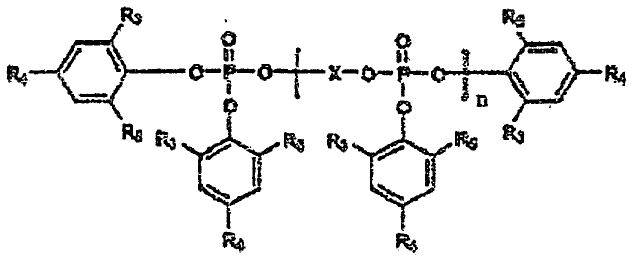 dans laquelle R₃, R₄ et R₅ sont chacun indépendamment un hydrogène ou un groupe alkyle en C₁-C₄, X est un groupe aryle en C₆-C₂₀ ou un groupe aryle en C₆-C₂₀ substitué par un alkyle et n est 0 à 4.

7. Composition de résine ignifuge sans halogène, selon la revendication 1, comprenant en outre des additifs choisis dans le groupe constitué par des plastifiants, des lubrifiants, des thermo-stabilisants, des agents anti-goutte, des antioxydants, des agents de compatibilité, des photo-stabilisants, des pigments, des colorants, des agents de charge inorganiques et leurs mélanges, en une quantité de 30 parties en poids ou moins sur la base de 100 parties en poids de la résine de base.

8. Article moulé, moulé à partir de la composition de résine ignifuge sans halogène, selon l'une quelconque des revendications 1 à 7.
